# EUROPEAN PATENT SPECIFICATION

(11) **EP 2 154 426 B1**
(45) Date of publication and mention of the grant of the patent: **09.10.2013**
(21) Application number: 09167264.2
(22) Date of filing: 05.08.2009
(51) Int. Cl.: F21V 14/08, F21W 101/10

(54) **Vehicle headlamp apparatus**
Fahrzeugscheinwerfer
Appareil d'éclairage pour véhicule automobile

(30) Priority: 07.08.2008 JP 2008204900
(43) Date of publication of application: 17.02.2010
(73) Proprietor: Koito Manufacturing Co., Ltd., Tokyo 108-8711 (JP)
(72) Inventor: Ohshio, Hirohiko c/o Koito Manufacturing Co., Ltd.,, Shizuoka-shi Shizuoka (JP); Shibanushi, Yoshio c/o Koito Manufacturing Co., Ltd.,, Shizuoka-shi Shizuoka (JP); Mochizuki, Kiyotaka c/o Koito Manufacturing Co., Ltd.,, Shizuoka-shi Shizuoka (JP); Yamamoto, Teruaki c/o Koito Manufacturing Co., Ltd.,, Shizuoka-shi Shizuoka (JP)
(74) Representative: Grünecker, Kinkeldey, Stockmair & Schwanhäusser

(56) References cited:
- EP-A2- 1 136 750
- EP-A2- 1 201 989
- EP-A2- 1 422 472
- EP-A2- 1 640 658

## Description

Apparatuses consistent with the present invention relate to a vehicle headlamp apparatus having a shade to form a plurality of light distribution patterns according to the generic clause of claim 1.

An apparatus according the generic clause of claim 1 is already known from document EP-1422472.

Document EP-1201989 already shows a vehicular headlamp having two shades, wherein the contour of one shade is optically limiting the light from the light source.

Vehicle headlamp apparatuses produce a low beam or a high beam, using direct light from a light source or using light which is emitted from the light source and forwardly reflected by a reflector. The low beam and the high beam have different light distribution patterns. In order to form the different light distribution patterns, one type of headlamp apparatus uses two light sources which are selectively turned on and off to switch the low beam and the high beam. This type of headlamp apparatus is adapted to be used in a four-lamp system and is called a fixed light distribution type headlamp. Another type of headlamp apparatus uses a single light source and shields a part of light from the light source when switching from the high beam to the low beam. This type of headlamp apparatus is adapted to be used in a two-lamp system and is called a variable light distribution type headlamp.

In order to switch beams with a single light source, related art headlamp apparatuses have a shade which is capable of shielding light. The shade is moved in accordance with a desired light distribution pattern to switch the beams. For example, there is proposed a cylindrical rotary shade which is rotatable about a horizontal axis (see, e.g., JP2004-349120A). The rotary shade is rotated by an actuator such as a motor. Ridge portions are formed on an outer circumferential surface of the rotary shade at different positions along a circumferential direction. Each of the ridge portions extends in an axial direction. One of the ridge portions forms a low beam light distribution pattern adapted for left-hand traffic, and another ridge portion forms another type of low beam light distribution pattern adapted for right-hand traffic. A circumferential portion of the rotary shade is largely cut out, at a position other than the positions where the ridge portions are formed, to form a high beam light distribution pattern.

As described above, rotary shades can have a plurality of ridge portions on an outer circumferential surface thereof so that various light distribution patterns can easily be switched to implement a multifunctional headlamp apparatus. Accordingly, it is expected that rotary shades will be applicable to various types of vehicles.

In recent years, in accordance with increasing performance and multifunctionalization of vehicles, headlamp apparatuses are also desired to produce light distribution patterns that can be adapted to various conditions, e.g., driving conditions, the presence of other vehicles and pedestrians, etc. In particular, it is desired to form light distribution patterns which can improve a driver's field of vision while preventing an offensive dazzle, i.e. a glare, to preceding vehicles (vehicles traveling ahead in the same direction), oncoming vehicles and pedestrians. A high beam light distribution pattern provides a large field of vision as compared with a low beam light distribution pattern. Thus, if a plurality of modified high beam light distribution patterns are designed to prevent a glare to different regions, optimum illuminations can be provided in accordance with running conditions and presence of vehicles and pedestrians ahead. However, in order to form a plurality of modified high beam light distribution patterns in addition to the basic high beam light distribution pattern and other light distribution patterns using the rotary shade described above, the circumferential portion of the rotary shade needs to be largely cut out at a plurality of locations, which requires a diameter of the rotary shade to be increased. The increase in the diameter of the rotary shade is unfavorable since it leads to an increase in size of an entire lamp unit of the headlamp apparatus.

In view of the foregoing, illustrative aspects of the present invention provide a vehicle headlamp apparatus having an improved configuration which enables the formation of a plurality of types of low beam light distribution patterns and high beam light distribution patterns.

This object is met by the features of claim 1.

Other aspects and advantages of the present invention will be apparent from the following description, the drawings and the claims.

Fig. 1 is a partial sectional side view of a headlamp apparatus according to an exemplary embodiment of the present invention;

Fig. 2A is a partial sectional top view of a lamp unit of the headlamp apparatus illustrating a configuration of a pattern-adjustable shade unit of the lamp unit;

Fig. 2B is a front view of the pattern-adjustable shade unit of Fig. 2A;

Fig. 3A is a front view of a first shade of the pattern-adjustable shade unit;

Fig. 3B is a front view of a right shadesection of a second shade of the pattern-adjustable shade unit;

Fig. 3C is a front view of a left shade section of the second shade;

Fig. 4 is a functional block diagram of the headlamp apparatus anda vehicle on which the headlamp apparatus is mounted;

Figs. 5A to 5F are explanatory views illustrating various arrangement patterns of the first shade and the second shade;

Figs. 6A to 6F are explanatory views illustrating light distribution patterns formed by the respective arrangement patterns of Figs. 5A to 5F;

Figs. 7A to 7F are explanatory views not forming part of the invention and illustrating arrangement patterns of the first shade and a modified example of the second shade for forming the respective light distribution patterns of Figs. 6A to 6F;

Figs. 8A to 8F are explanatory views not forming part of the invention and illustrating arrangement patterns of the first shade and a further modified example of the second shade for forming the respective light distribution patterns of Figs. 6A to 6F; and

Figs. 9A to 9C are schematic views illustrating a modified example of the lamp unit.

Hereinafter, exemplary embodiments of the present invention will be explained in detail with reference to the drawings. The following exemplary embodiments are examples only and do not limit the scope of the present invention as defined by the claims.

Vehicle headlamp apparatuses according to the following exemplary embodiments selectively produce a plurality of light distribution patterns, including a plurality of types of low beam light distribution patterns and high beam light distribution patterns, by controlling a first shade moving mechanism and a second shade moving mechanism. The first shade mechanism moves a first shade toward and away from an optical axis. The second shade mechanism moves a second shade toward and away from the optical axis. A light distribution pattern to be formed is selected by changing at least one of a light shielding state of the first shade and a light shielding state of the second shade. The first shade may rotate and/or slide with respect the second shade, and the second shade may rotate and/or slide with respect to the first shade.

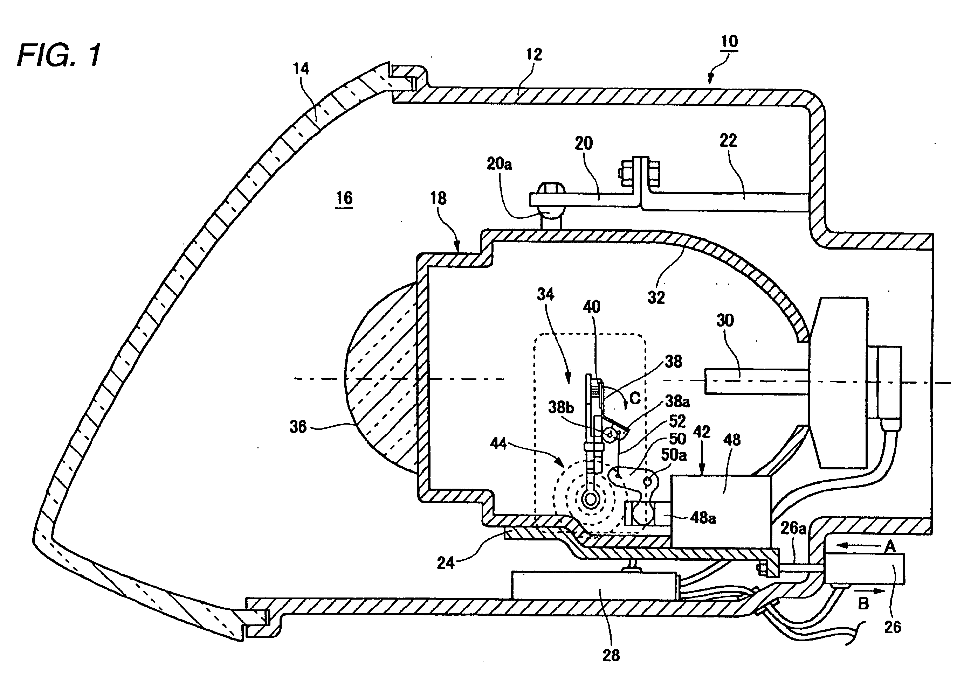

More specifically, Fig. 1 is a partial sectional side view of a vehicle headlamp apparatus 10 according to an exemplary embodiment of the present invention. It is to be noted that, in the following description, the vehicle headlamp apparatus 10 will be described as being mainly used in a left-hand traffic region. However, one of ordinary skill in the art will understand that the inventive concept may be alternatively be applied to a vehicle headlamp apparatus 10 for use in a right-hand traffic region.

The vehicle headlamp apparatus 10 is a variable light distribution type headlamp and is disposed on each of right and left sides of a vehicle. As shown in Fig. 1, the vehicle headlamp apparatus 10 includes a lamp body 12 having a front opening, a transparent cover 14 which covers the front opening of the lamp body 12, and a lamp unit 18 which is accommodated inside a lamp chamber 16. The lamp chamber 16 is defined by the lamp body 12 and the transparent cover 14. A lamp bracket 20 having a pivot mechanism 20a is attached to the lamp unit 18. The pivot mechanism 20a serves as a tilting center and/or a swiveling center of the lamp unit 18. The lamp bracket 20 is coupled, using a fastener such as a screw, to a body bracket 22 which is provided to extend from an inner surface of a wall of the lamp body 12. Thus, the lamp unit 18 is placed inside the lamp chamber 16 while being able, for example, to upwardly or downwardly tilt about the pivot mechanism 20a.

A unit bracket 24 is fixed to a lower surface of the lamp unit 18 to support the lamp unit 18 from below. A leveling actuator 26 is coupled to the unit bracket 24 and is disposed outside the lamp body 12. The leveling actuator 26 has a rod 26a which is projectable and retractable in directions A and B by using, for example, a motor. When the rod 26a is projected in the direction A, the lamp unit 18 is upwardly tilted about the pivot mechanism 20a, whereby an optical axis of the lamp unit 18 is upwardly adjusted. To the contrary, when the rod 26a is retracted in the direction B, the lamp unit 18 is downwardly tilted about the pivot mechanism 20a, whereby the optical axis is downwardly adjusted.

A headlamp controller 28 is arranged on an inner surface of the wall of the lamp chamber 16, for example, at a location below the lamp unit 18. The headlamp controller 28 controls, for example, turning on and off of the lamp unit 18 and formation of light distribution patterns. The headlamp controller 28 also controls the leveling actuator 26.

An aiming mechanism may be provided for the lamp unit 18. For example, an aiming pivot mechanism may be disposed at a coupling portion between the rod 26a of the leveling actuator 26 and the unit bracket 24, and the lamp bracket 20 and the body bracket 22 may be coupled via a pair of aiming screws which are spaced apart from each other in a widthwise direction of the vehicle. The aiming pivot mechanism serves as a tilting and turning center of the lamp unit 18 during the aiming adjustment. According to this aiming mechanism, when the aiming screws are both turned to forwardly push the lamp bracket 20, the lamp unit 18 is downwardly tilted about the aiming pivot mechanism, whereby the optical axis is downwardly adjusted. When the aiming screws are both turned to rearwardly pull the lamp bracket 20, the lamp unit 18 is upwardly tilted about the aiming pivot mechanism, whereby the optical axis is upwardly adjusted. When the aiming screw on the left is turned to push the lamp bracket 20, the lamp unit 18 is rightwardly turned about the aiming pivot mechanism, whereby the optical axis is rightwardly adjusted. When the aiming screw on the right is turned to push the lamp bracket 20, the lamp unit 18 is leftwardly turned about the aiming pivot mechanism, whereby the optical axis is leftwardly adjusted. This aiming adjustment is implemented before shipping of vehicles from an assembly plant, during a vehicle inspection, or after replacing a component, e.g. a light bulb, of the lamp unit 18, so as to adjust the lamp unit 18 to be in a prescribed orientation, based on which the control of the formation of light distribution patterns is executed.

The lamp unit 18 includes a light source 30, a reflector 32, a pattern-adjustable shade unit 34 and a projection lens 36. The light source 30 may be, for example, an incandescent lamp, a halogen lamp, a discharge lamp or a light emitting diode (LED). In the exemplary embodiment of Fig. 1, the light source 30 is a halogen lamp. The reflector 32 reflects light emitted from the light source 30 toward the projection lens 36. The pattern-adjustable shade unit 34 includes a first shade 38 and a second shade 40. The light reflected by the reflector 32 is partially shielded by the first shade 38 and the second shade 40, whereby a light distribution pattern corresponding to an arrangement of the first shade 38 and the second shade 40 is formed.

The first shade 38 is movable toward and away from the optical axis extending from the light source 30, and may have a plate-like configuration. When the first shade 38 is moved toward the optical axis to an advanced position, the first shade 38 shields a first part of the light emitted from the light source 30, namely, a part of the light directly emanated from the light source and/or a part of the light reflected by the reflector 32, to form a part of a contour (a cut-off line) of a low beam light distribution pattern. When the first shade 38 is moved away from the optical axis to a retracted position, the first shade 38 allows the formation of a high beam light distribution pattern. The second shade 40 is also movable toward and away from the optical axis, and may also have a plate-like configuration. When the second shade 40 is moved toward the optical axis to an advanced position, the second shade 40 shields a second part of the light which is above the first part of the light to form another part of the contour of the low beam light distribution pattern. When the second shade 40 is moved away from the optical axis to a retracted position, the second shade 40 allows the formation of the high beam light distribution pattern. In addition, when the second shade 40 is in the advanced position while the first shade 38 is in the retracted position, the second shade 40 forms a modified high beam light distribution pattern by masking a part of the high beam light distribution pattern.

A first shade moving mechanism 42 moves the first shade 38 selectively between the advanced position and the retracted position. The first shade 38 is moved continuously or intermittently between the advanced position and the retracted position. Similarly, a second shade moving mechanism 44 moves the second shade 40 selectively between the advanced position and the retracted position. The second shade 40 is moved continuously or intermittently between the advanced position and the retracted position. The first shade 38 may be used to form the low beam light distribution pattern, or a modified low beam light distribution pattern which is similar to the low beam light distribution pattern. The second shade 40 may be used to form the low beam light distribution pattern, or the modified high beam light distribution pattern which is similar to the high beam light distribution pattern.

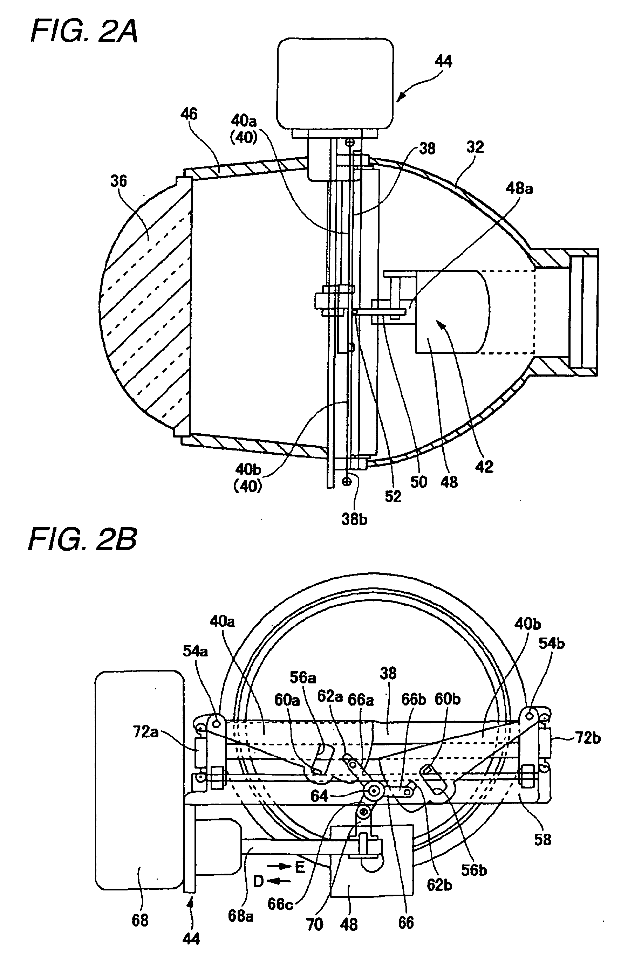

A configuration and an operation of the first shade moving mechanism 42 will be described with reference to Figs. 1 and 2A.

An outer cylindrical housing 46, having the reflector 32 on an inner side thereof, holds the first shade moving mechanism 42 and the second shade moving mechanism 44. The first shade moving mechanism 42 and the second shade moving mechanism 44 are mounted on the unit bracket 24 so as not to be affected by the tilting of the lamp unit 18. As shown in Fig. 1, the first shade moving mechanism 42 includes a shade solenoid 48 having a rod 48a, a L-shaped link arm 50 having a rotational center 50a, and a C-shaped rod 52 coupling the link arm 50 to an engagement portion 38a of the first shade 38. When energized, the shade solenoid 48 pulls in the rod 48a to a pulled-in position so as to rotate the link arm 50 in a counterclockwise direction about the rotational center 50a. As a result, the C-shaped rod 52 is pulled downwards so as to rotate the first shade 38 in a clockwise direction C about a rotational shaft 38b. That is, when the shade solenoid 48 is energized, the first shade 38 is moved from the advanced position to the retracted position so as to allow the formation of the high beam light distribution pattern. To the contrary, when deenergized, the shade solenoid 48 pushes out the rod 48a to a pushed-out position by a biasing force of mechanical biasing means, such as a return spring which is incorporated inside the shade solenoid 48, so as to rotate the link arm 50 in the clockwise direction about the rotational center 50a. As a result, the C-shaped rod 52 is pushed upwards so as to rotate the first shade 38 in the counterclockwise direction, which is opposite to the direction C, about the rotational shaft 38b. That is, when the shade solenoid 48 is deenergized, the first shade 38 is moved from the retracted position to the advanced position so as to shield a part of light from the light source 30 to form a part of the contour of the low beam light distribution pattern.

As described above, when the shade solenoid 48 is deenergized, the rod 48a of the shade solenoid 48 projects to move the first shade 38 to the advanced position so that the part of the contour of the low beam light distribution pattern is formed. Specifically, for example, a V-beam light distribution pattern, which will be described later as a modified low beam light distribution pattern, may be formed. Accordingly, in the event that the second shade 40 becomes inoperable or the shade solenoid 48 becomes uncontrollable, the first shade moving mechanism 48 automatically moves the first shade 38 to the advanced position to form the low beam light distribution pattern or at least the modified low beam light distribution pattern. That is, a fail-safe function can be provided in the headlamp apparatus to prevent an unintentional illumination of the high beam light distribution pattern or the modified high beam light distribution pattern toward oncoming vehicles, preceding vehicles or pedestrians. In order to automatically project the rod 48a when deenergized, the shade solenoid 48 may include mechanical means such as a spring thereinside.

Next, a configuration and an operation of the second shade mechanism 44 will be described with reference to Figs. 2A and 2B.

The second shade 40 is includes a right shade section 40a, a left shade section 40b and a Y-shaped link arm 66 coupling the right and left shade sections 40a, 40b. The right shade section 40a is used to form a low beam light distribution pattern adapted for right-hand traffic and a right-high light distribution pattern which is a modified high beam light distribution pattern. The left shade section 40 is used to form a low beam light distribution pattern adapted for left hand traffic and a left-high light distribution pattern which is another modified high beam light distribution pattern.

Each of the right and left shade sections 40a, 40b has a triangular shape. The right shade section 40a is rotatable about a right axis 54a, which is located at one of apex portions of the triangular shape of the right shade section 40a and is parallel to the optical axis. Similarly, the left shade section 40b is rotatable about a left axis 54b, which is located at one of apex portions of the triangular shape of the left shade section 40b and is also parallel to the optical axis. Each of the right and left shade sections 40a, 40b is formed with a first slot 56a, 56b in a middle portion thereof, and a respective stopper 60a, 60b protruding from a shade bracket 58 is engaged with the corresponding first slot 56a, 56b to limit a rotating range of each of the right and left shade sections 40a, 40b. As shown in Fig. 2B, when the stopper 60a is brought into abutment with a lower end portion of the first slot 56a, the right shade section 40a is positioned in the advanced position, at which the right shade section 40a forms, in cooperation with the first shade 38 in the advanced position, the low beam light distribution pattern adapted for right hand traffic. Similarly, when the stopper 60b is brought into abutment with a lower end portion of the first slot 56b, the left shade section 40b is positioned in the advanced position, at which the left shade section 40b forms, in cooperation with the first shade 38 in the advanced position, the low beam light distribution pattern adapted for left hand traffic. Likewise, upper end portions of the first slots 56a, 56b are formed to position the right and left shade sections 40a, 40b in the retracted position. However, because the right and left shade sections 40a, 40b are moved to the retracted position for the purpose of allowing the formation of the high beam light distribution pattern, the accuracy required for the retracted position is lower than that of the advanced position.

Each of the right and left shade sections 40a, 40b is further formed with a second slot 62a, 62b at an inward location in the vehicle width direction from the first slot 56a, 56b. The link arm 66 has a first arm 66a engaged with the second slot 62a of the right shade section 40a and a second arm 66b engaged with the second slot 62b of the left shade section 40b. The link arm 66 is rotatable about a rotational shaft 64 (a center axis) which protrudes from the shade bracket 58 to extend in a direction parallel to the optical axis. The second shade moving mechanism 44 includes a shade actuator 68 having a rod 68a, and an operating element 70 attached to a distal end of the rod 68a. The link arm 66 further has a third arm 66c which is engaged with the operating element 70 of the second shade moving mechanism 44. The shade actuator 68 is, for example, a motor, and the rod 68a is, for example, a rotational shaft of the motor. More specifically, the rod 68a may be configured as a feed screw. The shade actuator 68 is controlled to move the rod 68a in directions D and E so as to rotate the link arm 66 about the rotational shaft 64.

When the link arm 66 is rotated in a clockwise direction by moving the rod 68a in the direction D, the right shade section 40a is moved toward the advanced position and the left shade section 40b is moved toward the retracted position. To the contrary, when the link arm 66 is rotated in a counterclockwise direction by moving the rod 68a in the direction E, the right shade section 40a is moved toward the retracted position and the left shade section 40b is moved toward the advanced position.

Return springs 72a, 72b are coupled to the right and left shade sections 40a, 40b at an outward location in the vehicle width direction from the rotational axes 54a, 54b to bias the right and left shade sections 40a, 40b toward the advanced positions. That is, the return springs 72a, 72b bias the right and left shade sections 40a, 40b such that the stoppers 60a, 60b are brought into abutment with the lower end portions of the first slots 56a, 56b.

The first arm 66a of the link arm 66 is engaged with the second slot 62a. Thus, when the link arm 66 is rotated in the clockwise direction by a certain amount or more, the stopper 60a is brought into abutment with the lower end portion of the first slot 56a of the right shade section 40a, whereby the right shade section 40a is accurately stopped in the advanced position. Similarly, the second arm 66b of the link 66 is engaged with the elongated hole 62b. Thus, when the link arm 66 is rotated in the counterclockwise direction by a certain amount or more, the stopper 60b is brought into abutment with the lower end portion of the first slot 56b of the left shade section 40b, whereby the left shade section 40b is accurately stopped in the advanced position.

According to the configuration described above, high accuracy does not have to be required for a performance of the shade actuator 68, e.g., the motor and the feed screw. In other words, the second shade 40 can accurately be stopped in the advanced position using inexpensive components. Specifically, when the link arm 66 continues to rotate after the second shade 40 is stopped in the advanced position, the rotating motion can be absorbed by extra spaces of the second slots 62a, 62b. Consequently, even if the rotation of the motor of the shade actuator 68 exceeds a control value, the second shade 40 and the second shade moving mechanism 44 can be prevented from being overloaded.

According to the vehicle headlamp apparatus 10 described above, the first shade 38 and the second shade 40 can be selectively moved toward and away from the optical axis by separately controlling the first shade moving mechanism 42 and the second shade moving mechanism 44. Thus, various light distribution patterns can be formed.

Further, according to the second shade 40 and the second shade moving mechanism 44 described above, because the second shade 40 is divided into the right and left shade sections 40a, 40b, a range in which the second shade 40 moves between the advanced position and the retracted position is smaller than in a case in which the second shade 40 is configured as a single member. Therefore, it is possible to quickly switch the light distribution patterns and to reduce a size of the shade unit 34. In addition, because the right and left shade sections 40a, 40b can be moved between the advanced position and the retracted position by rotating the link arm 66 coupling the right and left shade sections 40a, 40b, the two shade sections 40a, 40b can be controlled with the single actuator.

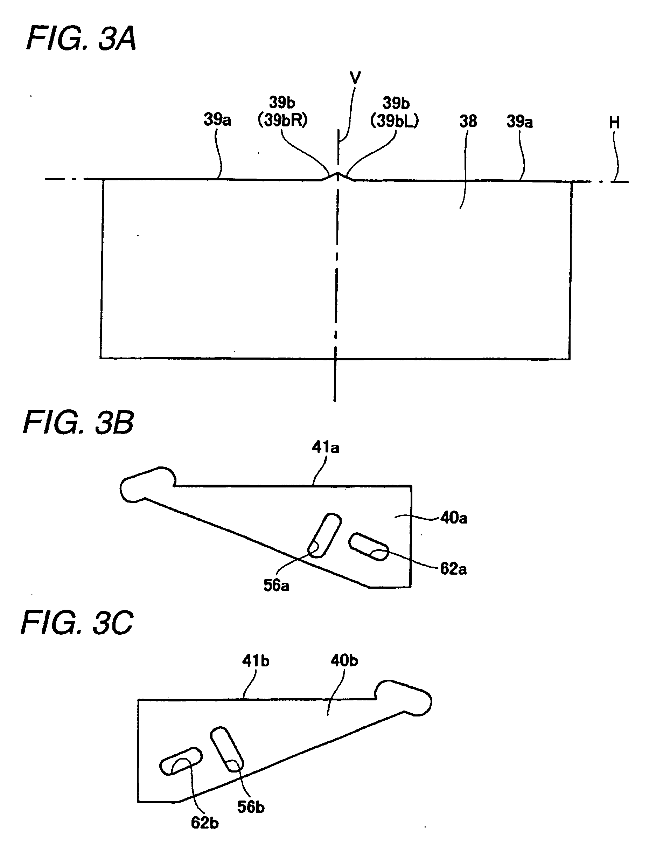

Figs. 3A to 3C are enlarged front views of the first shade 38, the right shade section 40a, and the left shade section 40b, respectively. As described above, the first shade 38 is configured to shield a part of the light from the light source 30 in the advanced position to form a part of the contour of the low beam light distribution pattern, and to allow the formation of the high beam light distribution pattern in the retracted position. For example, the first shade 38 may be formed as a rectangular plate. The second shade 40 is configured to form another part of the contour of the low beam light distribution pattern or to mask a part of the high beam light distribution pattern in the advanced position, and to allow the formation of the high beam light distribution pattern in the retracted position. For example, each of the shade sections 40a, 40b of the second shade 40 may be formed as a triangular plate.

More specifically, as shown in Fig. 3A, an upper edge of the first shade 38 includes a horizontal edge 39a and an inclined edge 39b obliquely extending from the horizontal edge 39a. When the first shade 38 is in the advanced position, the horizontal edge 39a is parallel to the horizontal line H. When the first and second shades 38, 40 are in the advanced positions, the inclined edge 39b couples the parts of the contour of the low beam light distribution pattern that are formed by the horizontal edge 39a and the second shade 40. The inclined edge 39b may be formed, for example, in the center of the upper edge of the first shade 38 which forms the cut-off line (a bright-dark boundary) of the low beam light distribution pattern. As shown in Fig. 3A, the inclined edge 39b may be formed in a triangular shape having right and left inclined edge sections 39bR, 39bL. The right inclined edge section 39bR is used to form the low beam light distribution pattern adapted for right hand traffic. The left inclined edge section 39bL is used to form the low beam light distribution pattern adapted for left hand traffic. Depending on the shapes of low beam light distribution patterns, the inclined edge 39b may be formed to have an isosceles triangle or a triangle having different right and left inclination angles.

When only the first shade 38a is used to form a light distribution pattern, a portion of the light distribution pattern formed corresponding to the inclined edge 39b is obliquely cut out. More specifically, a bright-dark boundary (a cut-off line) extends about at the level of the horizontal line H, both on the self lane (the lane on which the vehicle is traveling) and the oncoming lane, and the right and left inclined edge sections 39bR, 39bL of the inclined edge 39b form V-shaped cut-off lines between which a dark region is created. Thus, this light distribution pattern prevents a glare to vehicles and pedestrians at a far distance while improving forward visibility as compared with the low beam light distribution pattern. This light distribution pattern is a modified low beam light distribution pattern which can be considered as having an intermediate illumination characteristic between the low beam and the high beam, and is referred to, for example, as a V-shaped light distribution pattern.

As shown in Figs. 3B and 3C, the right shade section 40a and the left shade section 40b of the second shade 40 are triangular plate members, and may be line-symmetric with each other. As described above, the right shade section 40a is formed with the first slot 56a and the second slot 62a, and the left shade section 40b is formed with the first slot 56b and the second slot 62b. When the right shade section 40a is in the advanced position while the first shade 38 is also in the advanced position, a horizontal edge 41 a of the right shade section 40a forms a part of the contour of the low beam light distribution pattern which is different from the part formed by the first shade 38. More specifically, the horizontal edge 41a of the right shade section 40a cooperates with a right part of the horizontal edge 39a and the right inclined edge section 39bR of the first shade 38 to form the low beam light distribution pattern adapted for right hand traffic. When the right shade section 40a is in the advanced position while the first shade 38 is in the retracted position, a right-high light distribution pattern is formed in which an irradiating region is enlarged only on the self lane side in the right hand traffic. When the left shade section 40b is in the advanced position while the first shade 38 is also in the advanced position, a horizontal edge 41b of the left shade section 40b forms a part of the contour of the low beam light distribution pattern which is different form the part formed by the first shade 38. More specifically, the horizontal edge 41b of the left shade section 40b cooperates with a left part of the horizontal edge 39a and the left inclined section 39bL of the first shade 38 to form the low beam light distribution pattern adapted for left hand traffic. When the left shade section 40b is in the advanced position while the first shade 38 is in the retracted position, a left-high light distribution pattern is formed in which an irradiating region is enlarged only on the self lane side in the left hand traffic.

While the second shade 40 is arranged in front of the first shade 38 in this exemplary embodiment, the first shade 38 may be arranged in front of the second shade 40. In such a case, the first shade moving mechanism 42 is configured to rotate the first shade 38 in a region in front of the second shade 40.

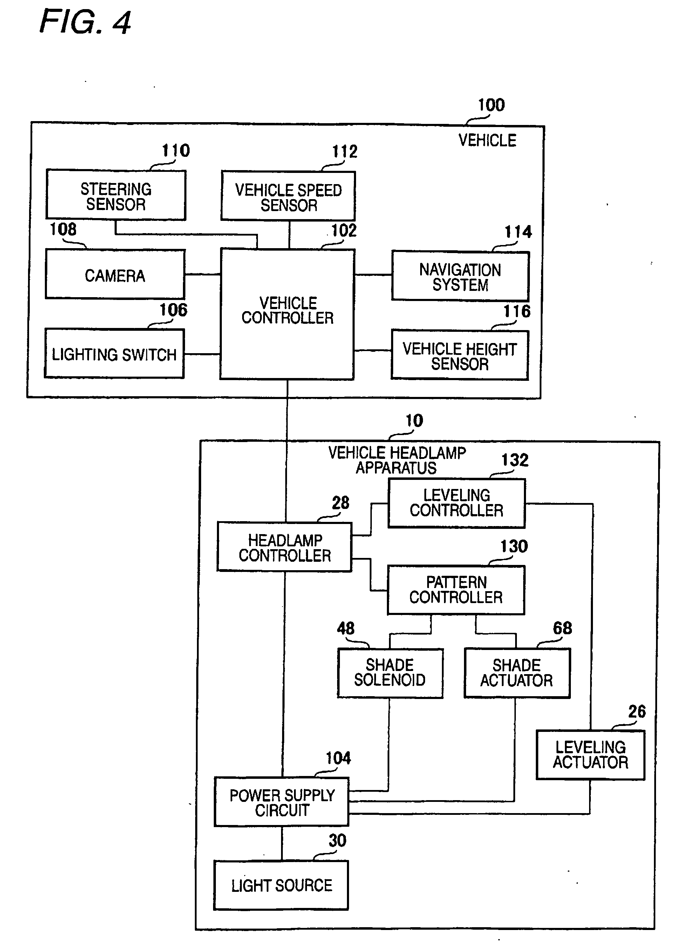

Fig. 4 is functional block diagram of a vehicle 100 on which a headlamp apparatus 10 is mounted. The vehicle headlamp apparatus 10 includes a headlamp controller 28, and the vehicle 100 includes a vehicle controller 102. The headlamp controller 28 controls, in accordance with an instruction from the vehicle controller 102, a power supply circuit 104 so as to turn the light source 30 on and off. The headlamp controller 28 further controls, in accordance with instructions from the vehicle controller 102, a pattern controller 130 to activate the shade solenoid 48 and the shade actuator 68, and a leveling controller 132 to activate the leveling actuator 26.

In this exemplary embodiment, the driver can switch the light distribution patterns to be formed by the vehicle headlamp apparatus 10 by operating a lighting switch 106. More specifically, in accordance with the operation of the lighting switch 106, the headlamp controller 28 controls the shade solenoid 48 and the shade actuator 63 via the pattern controller 130 to change the arrangement of the first shade 38 and the second shade 40.

The vehicle headlamp apparatus 10 may be configured to execute an automatic control, without an operation to the lighting switch 106. In that case, the vehicle headlamp apparatus 10 detects conditions surrounding the vehicle using various sensors and forms an optimum light distribution pattern for the detected conditions. For example, when it is detected that preceding vehicles, oncoming vehicles and/or pedestrians are present ahead of the vehicle, the vehicle controller 102 forms the low beam light distribution pattern to prevent glare, and instructs the headlamp controller 28 to arrange the first shade 38 and the second shade 40 such that the first shade 38 and the second shade 40 shields a certain amount of light from the light source 30 to form the low beam light distribution pattern. When no preceding vehicles, oncoming vehicles and pedestrians are detected as being present ahead of the vehicle, the vehicle controller 102 forms, for example, the high beam light distribution pattern to increase the driver's field of vision, and instructs the headlamp controller 28 to arrange the first shade 38 and the second shade 40 so as to form, for example, the high beam light distribution pattern or the V-shaped beam light distribution pattern. In the left hand traffic, the left-high light distribution pattern may be formed when it is detected that only an oncoming vehicle is present, and the right-high light distribution pattern may be formed when it is detected that only an preceding vehicle is present.

In order to detect an object, such as a preceding vehicle, an oncoming vehicle, and a pedestrian, a camera 108 (e.g., a stereoscopic camera) is coupled to the vehicle controller 102 as object recognition means. When image data provided from the camera 108 includes characteristics which are memorized in advance as indicating a vehicle and a pedestrian, the vehicle controller 102 provides the headlamp controller 28 with information to form an optimum light distribution pattern which takes the vehicles and pedestrians into consideration. The object recognition means is not limited to a camera, and may be a millimeter wave radar, an infrared radar, or any other device capable of detecting objects in front of the vehicle. In addition, a combination of those devices may be adopted. The camera 108 may be used exclusively for the vehicle headlamp apparatus 10 or may be commonly used for other systems. The control mode described above may be referred to as an image recognition mode.

The vehicle controller 102 can also obtain information from a steering sensor 110, a vehicle speed sensor 112 mounted on the vehicle 100, or other detector or sensor, so as to select a light distribution pattern to be formed in accordance with a running condition of the vehicle 100. For example, when the vehicle controller 102 determines based on information from the steering sensor 110 that the vehicle is turning, the vehicle controller 102 may swivel the lamp unit 18 in a direction in which the vehicle is turning so that the center of the light distribution pattern is directed in the turning direction in order to increase the driver's field of vision in the turning direction. Additionally or alternatively, the first shade 38 and the second shade 40 may be moved in accordance with the turning direction so as to form the left-high light distribution pattern or the right-high light distribution pattern. The control mode described above may be referred to as a turn-sensitive mode. The swiveling mechanism may be implemented by providing, for example, a motor driven swiveling table below the pattern-adjustable shade unit 34 or a motor driven mechanism which turns the aiming screws.

When the vehicle is running at a high speed during the night time, it is advantageous to implement an illumination by the headlamps such that an oncoming vehicle, a preceding vehicle, a road sign and/or a message board at a distance can be recognized as soon as possible. Thus, when it is determined that the vehicle is running at a high speed based on information from the vehicle speed sensor 112, the vehicle controller 102 may control to form a highway mode low beam light distribution pattern. The highway mode low beam light distribution pattern may be formed by maintaining the first shade 38 and the second shade 40 to be arranged to form the low beam light distribution pattern and by driving the leveling actuator 26 via the leveling controller 132 to shift the optical axis upwards in a range of about 0.2° to about 0.6°, thereby improving a distant visibility. The control mode described above may be referred to as a speed-sensitive mode.

In addition to the control modes described above, the vehicle controller 102 may obtain, from a navigation system 114, information on the form of the road ahead and locations where road signs are placed. By obtaining such information in advance, it is possible to smoothly form a light distribution pattern that is suitable for the road on which the vehicle is currently running. For example, the height of a cut-off line (i.e., a bright-dark boundary) of the low beam light distribution pattern may be finely adjusted in a vertical direction by driving the leveling actuator 26. When the vehicle is running on an uphill grade, the road extends above the horizontal line H from the driver's vision. In this case, the cut-off line is raised higher than the normal level so that the irradiation range is adjusted to match the road surface. To the contrary, when the vehicle is driving on a downhill grade, the cut-off line is lowered more than the normal level. By controlling the vehicle headlamp apparatus in this way, light irradiation adapted for an undulating road surface can be implemented. The control mode described above may be referred to as a navigation-sensitive mode. The shape and undulating conditions of the road may be recognized based on information from the camera 108.

The vehicle controller 102 may also obtain information on the current height of the vehicle from a vehicle height sensor 116. The orientation of the vehicle varies depending on the occupants and/or luggage loaded on the vehicle, and also depending on acceleration or deceleration of the vehicle. As the orientation of the vehicle changes, the height of the optical axis changes accordingly. That is, the light distribution pattern formed by the combined contour of the first shade 38 and the second shade 40 is vertically shifted. The vehicle height sensor 116 detects an extended or compressed state of suspensions of respective wheels, from which the vehicle controller 102 obtains information on the current orientation of the vehicle and provides the information to the headlamp controller 28. The headlamp controller 28 controls the leveling controller 132 in accordance with the information provided to drive the leveling actuator 26 so as to modify the optical axis such that the light distribution pattern formed by the first shade 38 and the second shade 40 is directed toward an optimum position that matches the running condition. By performing the control described above, a high-quality light illumination can be provided. The control mode described may be referred to as a vehicle height-sensitive mode.

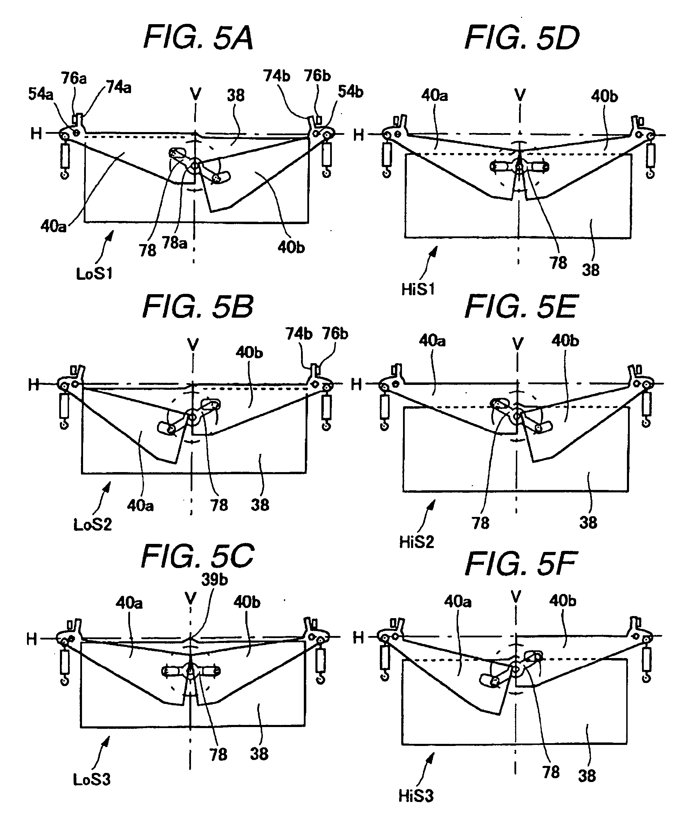

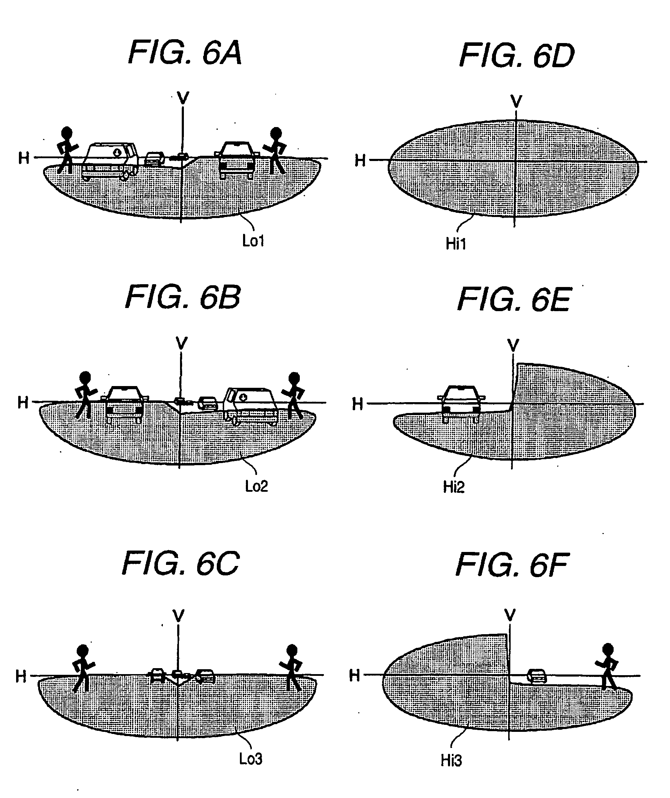

Examples of shade arrangements of the first shade 38 and the second shade 40 of the vehicle headlamp apparatus 10 are shown in Figs. 5A to 5F, and light distribution patterns formed by the respective shade arrangements are shown in Figs. 6A to 6F. It is to be noted that configurations of the right and left shade section 40a, 40b of the second shade 40 illustrated in Figs. 5A to 5F are different from the configurations shown in Figs. 3B and 3C. Specifically, as shown in Fig. 5A, instead of the first slots 56a, 56b shown in Figs. 3B and 3C, engagement claws 74a, 74b are formed in the vicinity of the rotational axes 54a, 54b, respectively. In addition, instead of the stoppers 60a, 60b, different set of stoppers 76a, 76b is formed on the shade bracket 58 in the vicinity of the rotational axes 54a, 54b, respectively.

By the engagement claw 74a being brought into abutment with the stopper 76a and the engagement claw 74b being brought into abutment with the stopper 76b, the positioning of the right shade section 40a and the left shade section 40b in their advanced positions is implemented as accurately as the positioning thereof implemented in the configuration shown in Fig. 2B.

Further, the Y-shaped link arm 66 in Fig. 2B is replaced with an I-shaped link arm 78 as shown in Fig. 5A. The link arm 78 is coupled to a rotational shaft 78a, which is parallel to the optical axis and is rotated the shade actuator 68, to rotate in clockwise and counterclockwise directions. According to this configuration, the driving system of the link arm 78 can be simplified, which contributes to a reduction in component costs and downsizing of the lamp unit 18.

Fig. 5A illustrates a shade arrangement LoS1 of the first shade 38 and the second shade 40 which forms a low beam light distribution pattern adapted for right hand traffic. In this case, the first shade 38 and the right shade section 40a of the second shade 40 are moved to the advanced positions, and the left shade section 40b is moved to the retracted position. More specifically, the headlamp controller 28 causes the rod 48a of the shade solenoid 48 to project via the pattern controller 130 so as to rotate the link arm 50 in the clockwise direction to move the C-shaped rod 52 upwards. As a result, the first shade 38 is rotated in the direction opposite to the direction C to move to the advanced position. The headlamp controller 28 further controls the shade actuator 68 to rotate in the clockwise direction via the pattern controller 130. As a result, the link arm 78 rotates in the clockwise direction to move the right shade section 40a to the advanced position and to move the left shade section 40b to the retracted position. As described above, because the engagement claw 74a is brought into abutment with the stopper 76a, the right shade section 40a is accurately stopped so as to be parallel to the horizontal line H.

Fig. 6A shows a low beam light distribution pattern Lo1 which is formed by the shade arrangement LoS1 of Fig. 5A and is adapted for right hand traffic. It is to be noted that, as shown in Fig. 1, the projection lens 36 is a planoconvex aspherical lens having a convex front surface and a flat rear surface. Thus, the projection lens 36 projects a light image formed on a rear focal plane, which substantially coincides with the locations of the first shade 38 and the second shade 40, onto an imaginary vertical screen ahead of the vehicle as a vertically and laterally inverted image. Consequently, the shade arrangement LoS1 shown in Fig. 5A forms the low beam light distribution pattern Lo1 shown in Fig. 6A which prevents glare to oncoming vehicles and pedestrians in the right hand traffic.

Fig. 5B shows another shade arrangement LoS2 of the first shade 38 and the second shade 40 which forms a low beam light distribution pattern adapted for left hand traffic. In this case, the first shade 38 and the left shade section 40b of the second shade 40 are moved to the advanced positions, and the right shade section 40a is moved to the retracted position. More specifically, the headlamp controller 28 controls the pattern controller 130 to cause the rod 48a of the shade solenoid 48 to project so as to rotate the link arm 50 in the clockwise direction to move the first shade 38 to the advanced position. The headlamp controller 28 further controls the pattern controller 130 to rotate the shade actuator 68 in the counterclockwise direction. As a result, the link arm 78 rotates in the counterclockwise direction to move the right shade section 40a to the retracted position and to move the left shade section 40b to the advanced position. Because the engagement claw 74b is brought into abutment with the stopper 76b, the left shade section 40b is accurately stopped to be parallel to the horizontal line H. Consequently, the shade arrangement LoS2 of Fig. 5B forms the low beam light distribution pattern Lo2 shown in Fig. 6B which prevents glare to oncoming vehicles and pedestrians in the left hand traffic.

Fig. 5C shows another shade arrangement LoS3 of the first shade 38 and the second shade 40 which forms the V-beam light distribution pattern, which is an intermediate light distribution pattern between the low beam and the high beam and is classified into the modified low beam light distribution pattern. In this case, the first shade 38 is moved the advanced position, while the right and left shade sections 40a, 40b of the second shade 40 are moved to the retracted positions. More specifically, the headlamp controller 28 controls the pattern controller 130 to cause the rod 48a of the shade solenoid 48 to project so as to rotate the link arm 50 to in the clockwise direction to move the first shade 38 to the advanced position. The headlamp controller 28 further controls the pattern controller 130 to rotate the shade actuator 68 such that the right and left arms of the link arm 78 become almost parallel to the horizontal line H. As a result, the link arm 78 moves the right and left shade sections 40a, 40b to move to the retracted positions. Consequently, in the shade arrangement LoS3 shown in Fig. 5C, only the first shade 38 shields the light from the light source 30 and the reflector 32. As described above, since the inclined edge 39b is formed substantially in the middle of the upper edge of the first shade 38, the resulting V-beam light distribution pattern creates a V-shaped dark region above the middle portion thereof as shown in Fig. 6C. Consequently, the V-beam light distribution pattern does not dazzle vehicles and pedestrians at a distance ahead thereof. In addition, because the second shade 40 does not substantially shield the light, the cut-off lines on both the self lane and the oncoming lane are formed at the level of the horizontal line H. Thus, the V-beam light distribution pattern Lo3 formed by the shade arrangement LoS3 has an intermediate characteristic between the low beam and the high beam in which the visibility is improved than the low beam.

Fig. 5D shows another shade arrangement HiS1 of the first shade 38 and the second shade 40 which forms the high beam light distribution pattern. In this case, the first shade 38, and the right and left shade sections 40a, 40b of the second shade 40 are all moved to the retracted positions. More specifically, the headlamp controller 28 controls the pattern controller 130 to pull in the rod 48a of the shade solenoid 48 so as to rotate the link arm 50 in the counterclockwise direction to move the first shade 38 to the retracted position. The headlamp controller 28 further controls the pattern controller 130 to rotate the shade actuator 68 such that the right and left arms of the link arm 78 become almost parallel to the horizontal line H. As a result, the link arm 78 moves the right shade section 40a and the left shade section 40b to the retracted positions. In this way, the shade arrangement HiS1 allows the light from the light source 30 and reflector 32 to be directed toward the front of the vehicle to form the high beam light distribution pattern Hi1 as shown in Fig. 6D which irradiates a wide range of region ahead of the vehicle.

Fig. 5E shows another shade arrangement HiS2 of the first shade 38 and the second shade 40 which forms the right-high light distribution pattern which is classified into a modified high beam light distribution pattern. In the left hand traffic, the right-high light distribution pattern irradiates only the opposing lane side for a high beam region. In this case, the first shade 38 is moved to the retracted position and the right shade section 40a of the second shade 40 is moved to the advanced position, and the left shade section 40b is moved to the retracted position. More specifically, the headlamp controller 28 controls the pattern controller 130 to pull in the rod 48a of the shade solenoid 48 so as to rotate the link arm 50 in the counterclockwise direction to move the first shade 38 to the retracted position. The headlamp controller 28 further controls the shade actuator 68 to rotate in the clockwise direction via the pattern controller 130. As a result, the link arm 78 rotates in the clockwise direction to move the right shade section 40a to the advanced position and to move the left shade section 40b to the retracted position. As shown in Fig. 6E, in the left hand traffic, the right-high light distribution pattern Hi2 is obtained by masking the self lane side of the upper portion of the high beam light distribution pattern Hi1 using the right shade section 40a. In the left hand traffic, this right-high light distribution pattern Hi2 is used when there is no opposing vehicle or a pedestrian in the opposing lane while there is an preceding vehicle and/or a pedestrian in the self lane so that it is possible to enhance the visibility only on the opposing lane by high beam illumination without dazzling the preceding vehicle and the pedestrian.

Fig. 5F shows another shade arrangement HiS3 of the first shade 38 and the second shade 40 which forms the left-high light distribution pattern which is classified into a modified high beam light distribution pattern. In the left hand traffic, the right-high light distribution pattern irradiates only the self lane side for a high beam region. In this case, the first shade 38 and the right shade section 40a are moved to the retracted positions, and the left shade section 40b is moved to the advanced position. More specifically, the headlamp controller 28 controls the pattern controller 130 to pull in the rod 48a of the shade solenoid 48 so as to rotate the link arm 50 in the counterclockwise direction to move the first shade 38 to the retracted position. The headlamp controller 28 further controls the shade actuator 68 to rotate in the counterclockwise direction via the pattern controller 130. As a result, the link arm 78 rotates in the counterclockwise direction to move the left shade section 40b to the advanced position and to move the right shade section 40a the retracted position. As shown in Fig. 6F, the left-high light distribution pattern Hi3 is formed by masking an opposing lane side of the upper portion of the high beam light distribution pattern Hi1 using the left shade section 40b. In the left hand traffic, this left-high light distribution pattern Hi3 is used when there is a opposing vehicle and/or a pedestrian in the opposing lane but there is no preceding vehicle or a pedestrian in the self lane so that it is possible to enhance the visibility only on the self lane by high beam illumination without dazzling the opposing vehicle or the pedestrian.

The shade arrangements and light distribution pattern described above are examples, and the first shade 38 and the second shade 40 may be arranged in various ways to form different light distribution patterns. In addition, even with the same shade arrangement, the cut-off line of the light distribution pattern may be changed by using the leveling actuator 26 or the light distribution pattern may be turned in a horizontal direction using the swiveling function.

When making a flash with the vehicle headlamp apparatus 10, it is advantageous for the low beam and the high beam to be switched quickly. Likewise, when the driver finds an oncoming vehicle or a pedestrian while using the high beam, it is advantageous that the high beam be switched to the low beam quickly. In this exemplary embodiment, a flash can be made by switching the shade arrangement between the arrangement LoS3 of Fig. 5C which forms the V-beam light distribution pattern and the arrangement HiS1 of Fig. 5D which forms the high beam light distribution pattern. This flashing operation can be smoothly implemented at a high speed by moving the first shade 38 between the retracted position and the advanced position using the shade solenoid 48. Similarly, when the driver recognizes an oncoming vehicle or a pedestrian while the high beam light distribution pattern is being formed by the shade arrangement HiS1 of Fig. 5D, the high beam can be quickly switched to the V-beam light distribution pattern, which serves as a pseudo low beam which prevents glare to the oncoming vehicle or the pedestrian at a distance, by moving the first shade 38 from the retracted position to the advanced position as shown in Fig. 5C. From this state, one of the right and left shade sections 40a, 40b may be moved to the advanced position by driving the shade actuator 68, which is driven at a lower speed than the shade solenoid 48, so as to form one of the low beam light distribution patterns Lo1, Lo2. In this case, because the first shade 38 is already at the advanced position, the follow up movement of the one of the right and left shade sections 40a, 40b does not give much strange feeling to the drivers and the pedestrians.

In the event that a failure occurs in the shade actuator 68 and/or the shade solenoid 48 so that the shade actuator 68 and/or the shade solenoid 48 become uncontrollable, the first shade 30 and/or the second shade 40 cannot be moved. In particular, in the event that the shade actuator 68 and/or the shade solenoid 48 become uncontrollable while the high beam light distribution pattern Hi1, the right-high light distribution pattern Hi2 or the left-high light distribution pattern Hi3 is being formed, i.e., while the first shade 38 is in the retracted position, there exists a possibility that oncoming vehicles and/or pedestrians are dazzled. However, when the shade solenoid 48 is not controlled in this exemplary embodiment, the shade solenoid 48 pulls in the rod 48a by biasing means such as a spring that is incorporated thereinside to forcibly move the first shade 38 to the advanced position. Thus, a fail-safe function can be realized in which the high beam illumination state is automatically shifted to a state in which a part of light from the light source 30 and/or the reflector 32 can be shielded to form a low beam light distribution pattern or a modified low beam light distribution pattern, thereby suppressing glare.

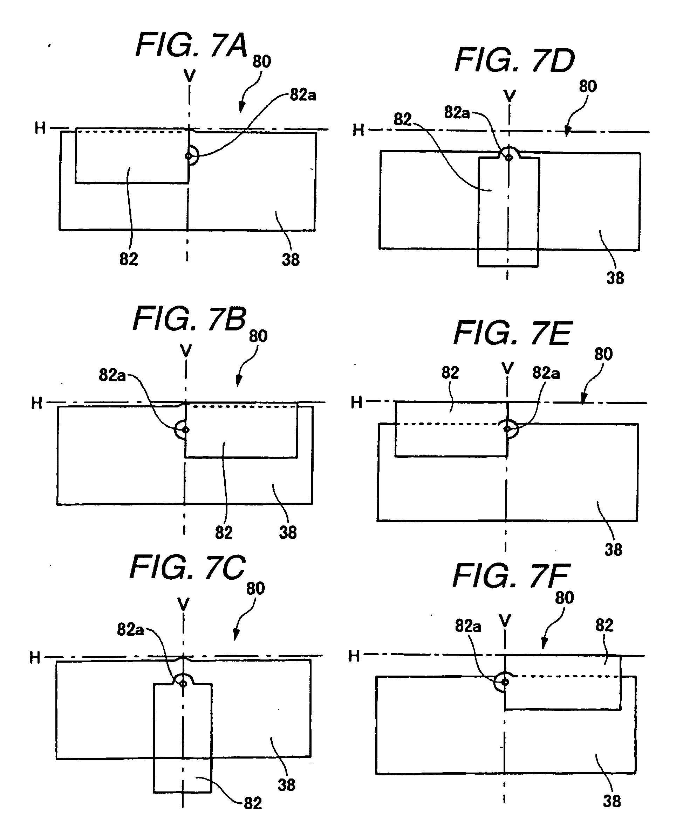

Figs. 7A to 7F illustrate a pattern-adjustable shade unit 80 not forming part of the present invention. The pattern-adjustable shade unit 80 is a modified example of the pattern-adjustable shade unit 34. The pattern-adjustable shade unit 34 of the foregoing exemplary embodiment has three plate members, namely, the first shade 38, the right shade section 40a and the left shade section 40b. On the other hand, the pattern-adjustable shade unit 80 has a simpler configuration which includes only two plate members, namely, the first shade 38 and a second shade 82 which functions as the right and left shade sections 40a, 40b.

Like the pattern-adjustable shade unit 34, the first shade 38 is moved toward and away from the optical axis by using the shade solenoid 48. The second shade 82 rotates about a rotational shaft 82a by using the shade actuator 68 so as to move toward and away from the optical axis. The axis of the rotational shaft 82a is parallel to the optical axis.

Fig. 7A shows an arrangement of the first shade 38 and the second shade 82 which forms a light distribution pattern similar to the low beam light distribution pattern Lo1 of Fig. 6A which is adapted for right hand traffic. In this case, the first shade 38 is moved to an advanced position, and the second shade 82 is rotated toward the left when viewed from the front of the lamp unit 18 to move to an advanced position. A stopper (not shown) limits the rotation of the second shade 82 to accurately stop the second shade 82 so as to be parallel to the horizontal line H in the advanced position.

Fig. 7B shows another arrangement of the first shade 38 and the second shade 82 which forms a light distribution pattern similar to the low beam light distribution pattern Lo2 of Fig. 6B which is adapted for left hand traffic. In this case, the first shade 38 is moved to the advanced position, and the second shade 82 is rotated towards the right when viewed from the front of the lamp unit 18 to move to an advanced position.

Fig. 7C shows another arrangement of the first shade 38 and the second shade 82 which forms a light distribution pattern similar to the V-beam light distribution pattern of Fig. 6C. In this case, the first shade 38 is moved to the advanced position, and the second shade 82 is rotated downward to move to a retracted position.

Fig. 7D shows another arrangement the first shade 38 and the second shade 82 which forms a light distribution pattern similar to the high beam light distribution pattern Hi1 of Fig. 6D. In this case, the first shade 38 is moved to a retracted position, and the second shade 82 is rotated downward to move to the retracted position.

Fig. 7E shows another arrangement of the first shade 38 and the second shade 82 which forms a light distribution pattern similar to the right-high light distribution pattern Hi2 of Fig. 6E. In this case, the first shade 38 is moved to the retracted position and the second shade 82 is rotated to the left when viewed from the front of the lamp unit 18 to move to the advanced position.

Fig. 7F shows another arrangement of the first shade 38 and the second shade 82 which forms a light distribution pattern similar to the left-high light distribution pattern Hi3 of Fig. 6F. In this case, the first shade 38 is moved to the retracted position and the second shade 82 is rotated to the right when viewed from the front of the lamp unit 18 to move to the advanced position.

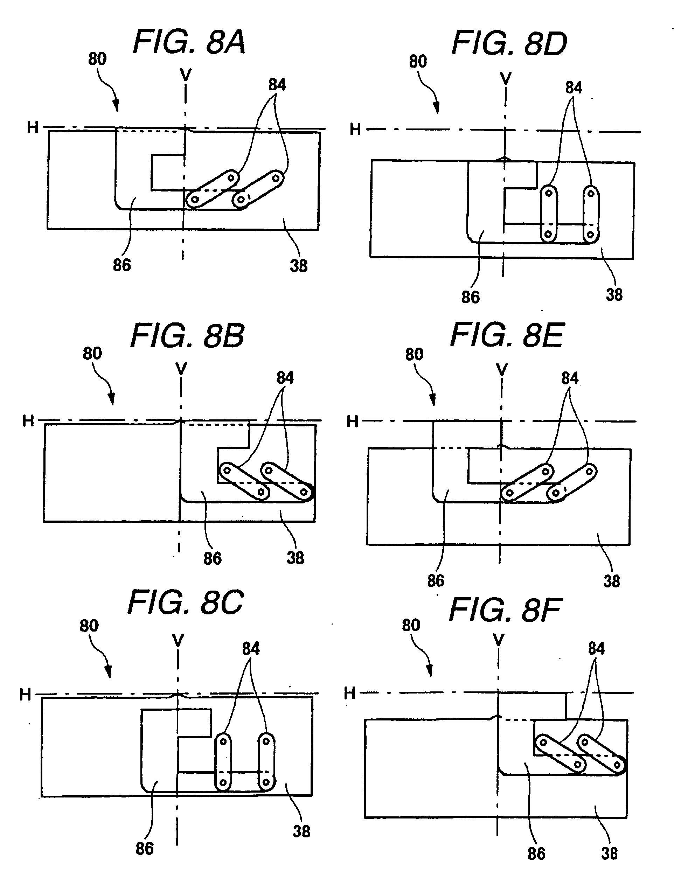

Figs. 8A to 8F illustrate another example not forming part of the present invention. A modified example of the pattern-adjustable shade unit 80 is used in which a second shade and a second shade moving mechanism are modified. More specifically, in this modified example, a second shade 86 is moved toward and away from the optical axis by using parallel links 84. In the example shown in Figs. 8A to 8F, two parallel links 84 are used. At least one of the parallel links 84 is driven to rotate, whereby the second shade 86 is slid with respect to the first shade 38 to be in arrangements illustrated in Figs. 8A to 8F to form light distribution patterns similar to the light distribution patterns of Figs. 6A to 6F. In this configuration in which the parallel links 84 are used, a moving range of the second shade 86 is smaller as compared with a moving range of the second shade 82 shown in Figs. 7A to 7F. Thus, it is possible to downsize the lamp unit 18.

The pattern-adjustable shade unit 80 having the first shade 38 and the second shade 82, 86 is advantageous in that, as compared with the pattern-adjustable shade unit 34, the number of components can be reduced and the second shade mechanism 44 can be simplified. Accordingly, while the pattern-adjustable shade unit 34 may be used to provide increased light distribution pattern switching speed, the pattern-adjustable shade unit 80 may be used to provide a more simplified construction and/or low cost.

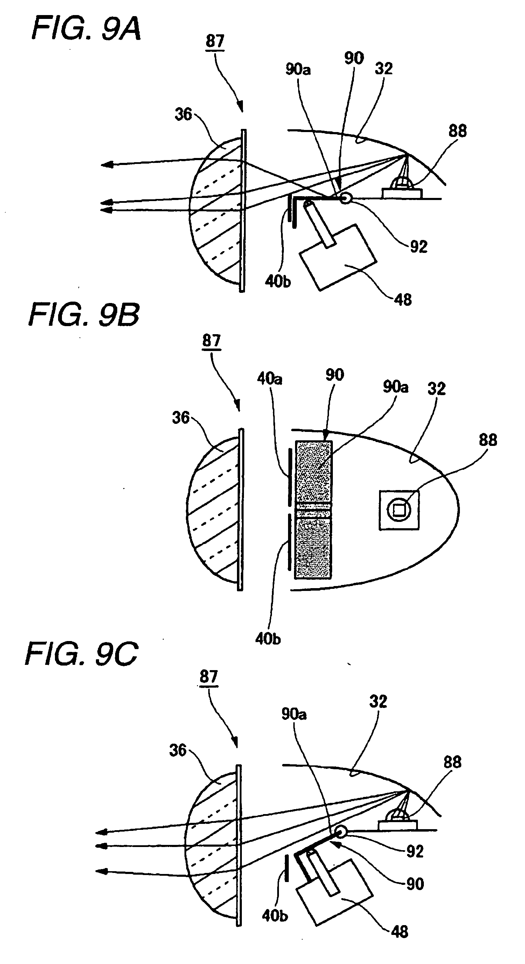

Figs. 9A to 9C are schematic views of a lamp unit 87 which is a modified example of the lamp unit 18. Specifically, the lamp unit 87 has an LED 88 as a light source. As shown in Figs. 9A and 9C, a light emitting face of the LED 88 may be oriented upward to face the reflector 32, which forwardly reflects light from the LED 88. Generally, light intensity of LEDs is lower than those of other types of light sources such as a halogen lamp. Thus, in a case in which an LED is used in a lamp unit having a shade that shields light, it is advantageous to increase an amount of light that is forwardly directed from the lamp unit. As shown in Figs. 9A and 9C, the lamp unit 87 has a modified first shade 90 which is an L-shaped plate member. The first shade 90 is rotated by the shade solenoid 48 about a rotational shaft 92 to move toward and away from the optical axis, and shields a part of the light reflected by the reflector 32 when moved toward the optical axis to be in an advanced position. As shown in Fig. 9B, the first shade 90 has an upper surface having a horizontal edge that forms a cut-off line. At least a portion of the upper surface of the first shade 90 is formed as a reflecting face 90a. The reflecting face 90a may be formed by, for example, deposition or spattering.

In the lamp unit 87, when the first shade 90 is in the advanced position as shown in Fig. 9A, the light that is not shielded by the first shade 90 is directed toward the projection lens 36. In addition, the light reflected by the reflecting face 90a is also directed toward the projection lens 36. Thus, the light which would be simply shielded if the reflecting face 90a is not provided can be used to form the low beam light distribution pattern or a modified low beam light distribution pattern. The reflecting face 90a is disposed in the vicinity of the horizontal edge of the first shade 90. Therefore, the light reflected by the reflecting face 90a additionally illuminates a portion of the light distribution pattern that is in the vicinity of the cut-off line. As a result, luminous intensity of the low beam light distribution pattern or the modified low beam light distribution pattern can be increased to improve a driver's visibility. A location of the reflecting face 90a may be changed to increase the luminous intensity on a portion of the light distribution pattern.

Further, although it is not shown in Fig. 9C, the reflecting face 90a may be configured and positioned to reflect the light from the reflector 32 toward the projection lens 36 also when the first shade 90 is moved to a retracted position. In such a case, the light reflected by the reflecting face 90a additionally illuminates a portion of the high beam light distribution pattern or the modified high beam light distribution pattern to increase luminous intensity so that the driver's visibility can be improved.

While the present invention has been shown and described with reference to certain exemplary embodiments thereof, it will be understood by those skilled in the art that various changes in form and details may be made therein without departing from the scope of the present invention as defined by the appended claims.

## Claims

1. A vehicle headlamp apparatus (10) comprising:
a light source (30, 88) from which an optical axis forwardly extends;
a first shade (38, 90);
a first shade moving mechanism (42) which moves the first shade (38, 90) toward and away from the optical axis;
a second shade (40, 82, 86);
a second shade moving mechanism (44) which moves the second shade (40, 82, 86) toward and away from the optical axis; and
a pattern controller (130) which controls the first shade moving mechanism (42) and the second shade moving mechanism (44) so as to selectively form a plurality of light distribution patterns (Lo1, Lo2, Lo3, Hi1, Hi2, Hi3) using at least one of the first shade (38, 90) and the second shade (40, 82, 86), wherein
when the first shade (38, 90) is moved toward the optical axis to an advanced position, the first shade (38, 90) shields a first part of light emitted from the light source (30, 88) to form a part of a contour of a low beam light distribution pattern (Lo1, Lo2), and
when the second shade (40, 82, 86) is moved toward the optical axis to an advanced position while the first shade (38, 90) is in the advanced position, the second shade (40, 82, 86) shields a second part of the light which is above the first part of the light to form another part of the contour of the low beam light distribution pattern (Lo1, Lo2),
**characterized in that**
the second shade (40) comprises:
a right shade section (40a) which is rotatable about a right axis (54a) which is parallel to the optical axis; and
a left shade section (40b) which is rotatable about a left axis (54b) which is parallel to the optical axis.

2. The vehicle headlamp apparatus (10) according to claim 1, wherein
when the first shade (38, 90) is moved away from the optical axis to a retracted position, the first shade (38, 90) allows a formation of a high beam light distribution pattern (Hi1),
when the second shade (40, 82, 86) is moved away from the optical axis to a retracted position, the second shade (40, 82, 86) allows the formation of the high beam light distribution pattern (Hi1), and
when the second shade (40, 82, 86) is in the advanced position while the first shade (38, 90) is in the retracted position, the second shade (40, 82, 86) masks a part of the high beam light distribution pattern (Hi1) to form a modified high beam light distribution pattern (Hi2, Hi3).

3. The vehicle headlamp apparatus (10) according to claim 1 or 2, wherein an upper edge of the first shade (38, 90) comprises:
a horizontal edge (39a) which, when the first shade (38, 90) is in the advanced position, horizontally extends to form said part of the contour of the low beam light distribution pattern (Lo1, Lo2); and
an inclined edge (39b) which obliquely extends from the horizontal edge (39b) wherein when the first and second shades (38, 40) are in advanced positions the inclined edge (39b) couples the parts of the contour of the low-beam light distribution patternthat is formed by the horizontal edges (39a) and the second shade (40).

4. The vehicle headlamp apparatus (10) according to claim 3, wherein the inclined edge (39b) is formed in a triangular shape and comprises right and left inclined edge sections (39R, 39L).

5. The vehicle headlamp apparatus (10) according to claim 3 or 4, wherein the horizontal edge (39a) comprises a right part and a left part, between which the inclined edge (39b) is disposed.

6. The vehicle headlamp apparatus (10) according to any one of claims 3 to 5, wherein the first shade (90) further comprises a reflecting face (90a) in a vicinity of the horizontal edge,and
when the first shade (90) is in the advanced position, the reflecting face (90a) reflects at least a part of the first part of the light to additionally irradiate a portion of the low beam light distribution pattern (Lo1, Lo2).

7. The vehicle headlamp apparatus (10) according to any one of the preceding claims, wherein the second shade moving mechanism (44) rotates the second shade (40, 82, 86) about at least one axis (54a, 54b, 64, 78a, 82a) which is parallel to the optical axis wherein.

8. The vehicle headlamp apparatus (10) according to claim 1, wherein the second shade (40) further comprises a link arm (66, 78) which is rotatable about a center axis (64, 78a) which is parallel to the optical axis, wherein
the link arm (66, 78) is coupled to the right and left shade sections (40a, 40b), and
the second shade moving mechanism (44) rotates the link arm (66, 78) so as to selectively move the right and left shade sections (40a, 40b) to the advanced position to shield the second part of the light.

9. The vehicle headlamp apparatus (10) according to any one of the preceding claims, wherein, when the first shade moving mechanism (42) is not under control of the pattern controller (130), the first shade moving mechanism (42) forcibly moves the first shade (38, 90) to the advanced position.

10. The vehicle headlamp apparatus (10) according to any one of the preceding claims, further comprising:
a reflector (32) which reflects the light emitted from the light source (30, 88); and
a projection lens (36) which forwardly projects an unshielded part of the light,
wherein the first shade (38, 90) and the second shade (40, 82, 86) are arranged between the light source (30, 88) and the projection lens (36).

11. The vehicle headlamp apparatus (10) according to any one of the preceding claims, wherein the first shade (38, 90) and the second shade (40, 82, 86) are arranged in front of one another.

## Patentansprüche

1. Fahrzeug-Scheinwerfervorrichtung (10), die umfasst:
eine Lichtquelle (30, 88), von der aus sich eine optische Achse nach vorn erstreckt;
eine erste Blende (38, 90);
einen Mechanismus (42) zum Bewegen der ersten Blende, der die erste Blende (38, 90) auf die optische Achse zu und von ihr weg bewegt;
eine zweite Blende (40, 82, 86);
einen Mechanismus (44) zum Bewegen der zweiten Blende, der die zweite Blende (40, 82, 86) auf die optische Achse zu und von ihr weg bewegt; und
eine Muster-Steuereinrichtung (130), die den Mechanismus (42) zum Bewegen der ersten Blende und den Mechanismus (44) zum Bewegen der zweiten Blende so steuert, dass unter Verwendung der ersten Blende (38, 90) oder/und der zweiten Blende (40, 82, 86) selektiv eine Vielzahl von Lichtverteilungsmustern (Lo1, Lo2, Lo3, Hi1, Hi2, Hi3) erzeugt werden, wobei
wenn die erste Blende (38, 90) in Richtung der optischen Achse an eine ausgefahrene Position bewegt wird, die erste Blende (38, 90) einen ersten Teil von der Lichtquelle (10) emittierten Lichtes abschirmt, um einen Teil einer Kontur eines Abblend-Lichtverteilungs-musters (Lo1, Lo2) auszubilden, und
wenn die zweite Blende (40, 82, 86) in Richtung der optischen Achse an eine ausgefahrene Position bewegt wird, während sich die erste Blende (38, 90) in der ausgefahrenen Position befindet, die zweite Blende (40, 82, 86) einen zweiten Teil des Lichtes abschirmt, der sich oberhalb des ersten Teils des Lichtes befindet, um einen anderen Teil der Kontur des Abblend-Lichtverteilungsmusters (Lo1, Lo2) zu erzeugen,
**dadurch gekennzeichnet, dass**
die zweite Blende (40) umfasst:
einen rechten Blenden-Teilabschnitt (40a), der um eine rechte Achse (54a) herum gedreht werden kann, die parallel zu der optischen Achse ist; und
einen linken Blenden-Teilabschnitt (40b), der um eine linke Achse (54b) herum gedreht werden kann, die parallel zu der optischen Achse ist.

2. Fahrzeug-Scheinwerfervorrichtung (10) nach Anspruch 1, wobei
wenn die erste Blende (38, 90) von der optischen Achse weg an eine eingefahrene Position bewegt wird, die erste Blende (38, 90) eine Erzeugung eines Fern-Lichtverteilungs-musters (Hi1) ermöglicht,
wenn die zweite Blende (40, 82, 86) von der optischen Achse weg an eine eingefahrene Position bewegt wird, die zweite Blende (40, 82, 86) die Erzeugung eines Fern-Lichtverteilungsmusters (Hi1) ermöglicht, und
wenn sich die zweite Blende (40, 82, 86) in der ausgefahrenen Position befindet und sich die erste Blende (38, 90) dabei in der eingefahrenen Position befindet, die zweite Blende (40, 82, 86) einen Teil des Fern-Lichtverteilungsmusters (Hi1) abdeckt, um ein modifiziertes Fern-Lichtverteilungsmuster (Hi2, Hi3) zu erzeugen.

3. Fahrzeug-Scheinwerfervorrichtung (10) nach Anspruch 1 oder 2, wobei eine Oberkante der ersten Blende (38, 90) umfasst:
eine horizontale Kante (39a), die sich, wenn sich die erste Blende (38, 90) in der ausgefahrenen Position befindet, horizontal erstreckt, um den Teil der Kontur des Abblend-Lichtverteilungsmusters (Lo1, Lo2) zu erzeugen; und
eine geneigte Kante (39b), die sich schräg von der horizontalen Kante (39b) aus erstreckt, wobei, wenn sich die erste und die zweite Blende (38, 40) in ausgefahrenen Positionen befinden, die geneigte Kante (39b) die Teile der Kontur des Abblend-Lichtverteilungsmusters verbindet, das durch die horizontale Kante (39a) und die zweite Blende (40) erzeugt wird.

4. Fahrzeug-Scheinwerfervorrichtung (10) nach Anspruch 3, wobei die geneigte Kante (39b) in einer Dreieckform ausgebildet ist und einen rechten sowie einen linken geneigten Kantenabschnitt (39R, 39L) umfasst.

5. Fahrzeug-Scheinwerfervorrichtung (10) nach Anspruch 3 oder 4, wobei die horizontale Kante (39a) einen rechten Teil und einen linken Teil umfasst, zwischen denen die geneigte Kante (39b) angeordnet ist.

6. Fahrzeug-Scheinwerfervorrichtung (10) nach einem der Ansprüche 3 bis 5, wobei die erste Blende (90) des Weiteren eine reflektierende Fläche (90a) in der Nähe der horizontalen Kante umfasst, und
wenn sich die erste Blende (90) in der ausgefahrenen Position befindet, die reflektierende Fläche (90a) wenigstens einen Teil des ersten Teils des Lichtes reflektiert, um zusätzlich einen Anteil des Abblend-Lichtverteilungsmusters (Lo1, Lo2) auszustrahlen.

7. Fahrzeug-Scheinwerfervorrichtung (10) nach einem der vorangehenden Ansprüche, wobei der Mechanismus (44) zum Bewegen der zweiten Blende die zweite Blende (40, 82, 86) um wenigstens eine Achse (54a, 54b, 64, 78a, 82a) herum dreht, die parallel zu der optischen Achse ist.

8. Fahrzeug-Scheinwerfervorrichtung (10) nach Anspruch 1, wobei die zweite Blende (40) des Weiteren einen Verbindungsarm (66, 78) umfasst, der um eine Mittelachse (64, 7z8a) herum gedreht werden kann, die parallel zu der optischen Achse ist, wobei der Verbindungsarm (66, 78) mit dem rechten und dem linken Blenden-Teilabschnitt (40a, 40b) verbunden ist, und
der Mechanismus (44) zum Bewegen der zweiten Blende den Verbindungsarm (66, 78) so dreht, dass der rechte und der linke Blenden-Teilabschnitt (40a, 40b) selektiv an die ausgefahrene Position bewegt werden, um den zweiten Teil des Lichtes abzuschirmen.

9. Fahrzeug-Scheinwerfervorrichtung (10) nach einem der vorangehenden Ansprüche, wobei, wenn der Mechanismus (42) zum Bewegen der ersten Blende nicht von der Muster-Steuereinrichtung (130) gesteuert wird, der Mechanismus (42) zum Bewegen der ersten Blende die erste Blende (38, 90) unter Druck an die ausgefahrene Position bewegt.

10. Fahrzeug-Scheinwerfervorrichtung (10) nach einem der vorangehenden Ansprüche, die des Weiteren umfasst:
einen Reflektor (32), der das von der Lichtquelle (33, 88) emittierte Licht reflektiert; und
eine Projektionslinse (36), die einen nicht abgeschirmten Teil des Lichtes nach vorn projiziert,
wobei die erste Blende (38, 90) und die zweite Blende (40, 82, 86) zwischen der Lichtquelle (30, 88) und der Projektionslinse (36) angeordnet sind.

11. Fahrzeug-Scheinwerfervorrichtung (10) nach einem der vorangehenden Ansprüche, wobei die erste Blende (38, 90) und die zweite Blende (40, 82, 86) voreinander angeordnet sind.

## Revendications

1. Appareil d'éclairage (10) pour véhicule automobile comprenant :
une source de lumière (30, 88) à partir de laquelle un axe optique s'étend vers l'avant ;
une première visière (38, 90) ;
un premier mécanisme de déplacement de visière (42) qui déplace la première visière (38, 90) vers et à distance de l'axe optique ;
une seconde visière (40, 82, 86) ;
un second mécanisme de déplacement de visière (44) qui déplace la seconde visière (40, 82, 86) vers et à distance de l'axe optique ; et
un contrôleur de modèle (130) qui contrôle le premier mécanisme de déplacement de visière (42) et le second mécanisme de déplacement de visière (44) afin de former sélectivement une pluralité de modèles de répartition de lumière (Lo1, Lo2, Lo3, Hi1, Hi2, Hi3) en utilisant au moins l'une parmi la première visière (38, 90) et la seconde visière (40, 82, 86), dans lequel
lorsque la première visière (38, 90) est déplacée vers l'axe optique dans une position avancée, la première visière (38, 90) masque une première partie de la lumière émise de la source de lumière (30, 88) afin de former une partie d'un contour d'un modèle de répartition de lumière en feu de croisement (Lo1, Lo2), et
lorsque la seconde visière (40, 82, 86) est déplacée vers l'axe optique dans une position avancée alors que la première visière (38, 90) est dans la position avancée, la seconde visière (40, 82, 86) masque une seconde partie de la lumière qui est au-dessus de la première partie de la lumière afin de former une autre partie du contour du modèle de répartition de lumière en feu de croisement (Lo1, Lo2),
**caractérisé en ce que**
la seconde visière (40) comprend :
une section de visière droite (40a) qui peut tourner autour d'un axe droit (54a) qui est parallèle à l'axe optique ; et
une section de visière gauche (40b) qui peut tourner autour d'un axe gauche (54b) qui est parallèle à l'axe optique.

2. Appareil d'éclairage (10) pour véhicule selon la revendication 1, dans lequel
lorsque la première visière (38, 90) est éloignée de l'axe optique dans une position rétractée, la première visière (38, 90) permet une formation d'un modèle de réparation de lumière en feu de route (Hi1),
lorsque la seconde visière (40, 82, 86) est éloignée de l'axe optique dans une position rétractée, la seconde visière (40, 82, 86) permet la formation du modèle de répartition de lumière en feu de route (Hi1), et
lorsque la seconde visière (40, 82, 86) est dans la position avancée, alors que la première visière (38, 90) est dans la position rétractée, la seconde visière (40, 82, 86) masque une partie du modèle de réparation de lumière en feu de route (Hi1) afin de former un modèle de répartition de lumière en feu de route modifié (Hi2, Hi3).

3. Appareil d'éclairage (10) pour véhicule selon la revendication 1 ou 2, dans lequel un bord supérieur de la première visière (38, 90) comprend :
un bord horizontal (39a) qui, lorsque la première visière (38, 90) est dans la position avancée, s'étend horizontalement pour former ladite partie du contour du modèle de répartition de lumière en feu de croisement (Lo1, Lo2) ; et
un bord incliné (39b) qui s'étend obliquement à partir du bord horizontal (39b), dans lequel lorsque les première et seconde visières (38, 40) sont dans les positions avancées, le bord incliné (39b) couple les parties du contour du modèle de répartition de lumière en feu de croisement qui est formé par les bords horizontaux (39a) et la seconde visière (40).

4. Appareil d'éclairage (10) pour véhicule selon la revendication 3, dans lequel le bord incliné (39b) est formé par une forme triangulaire et comprend des sections de bord incliné droite et gauche (39R, 39L).

5. Appareil d'éclairage (10) pour véhicule selon la revendication 3 ou 4, dans lequel le bord horizontal (39a) comprend une partie droite et une partie gauche, entre lesquelles est disposé le bord incliné (39b).

6. Appareil d'éclairage (10) pour véhicule selon l'une quelconque des revendications 3 à 5, dans lequel la première visière (90) comprend en outre une face réfléchissante (90a) à proximité du bord horizontal, et
lorsque la première visière (90) est dans la position avancée, la face réfléchissante (90a) reflète au moins une partie de la première partie de la lumière pour rayonner, de plus, une partie du modèle de répartition de lumière en feu de croisement (Lo1, Lo2).

7. Appareil d'éclairage (10) pour véhicule selon l'une quelconque des revendications précédentes, dans lequel le second mécanisme de déplacement de visière (44) fait tourner la seconde visière (40, 82, 86) autour d'au moins un axe (54a, 54b, 64, 78a, 82a) qui est parallèle à l'axe optique.

8. Appareil d'éclairage (10) pour véhicule selon la revendication 1, dans lequel la seconde visière (40) comprend en outre un bras de liaison (66, 78) qui peut tourner autour d'un axe central (64, 78a) qui est parallèle à l'axe optique, dans lequel
le bras de liaison (66, 78) est couplé aux sections de visière droite et gauche (40a, 40b), et
le second mécanisme de déplacement de visière (44) fait tourner le bras de liaison (66, 78) afin de déplacer sélectivement les sections de visière droite et gauche (40a, 40b) dans la position avancée pour masquer la seconde partie de la lumière.

9. Appareil d'éclairage (10) pour véhicule selon l'une quelconque des revendications précédentes, dans lequel, lorsque le premier mécanisme de déplacement de visière (42) n'est pas sous contrôle du contrôleur de modèle (130), le premier mécanisme de déplacement de visière (42) déplace de force la première visière (38, 90) dans la position avancée.

10. Appareil d'éclairage (10) pour véhicule selon l'une quelconque des revendications précédentes, comprenant en outre :
un réflecteur (32) qui reflète la lumière émise par la source de lumière (30, 88) ; et
une lentille de projection (36) qui projette une partie non masquée de la lumière vers l'avant,
dans lequel la première visière (38, 90) et la seconde visière (40, 82, 86) sont agencées entre la source de lumière (30, 88) et la lentille de projection (36).

11. Appareil d'éclairage (10) pour véhicule selon l'une quelconque des revendications précédentes, dans lequel la première visière (38, 90) et la seconde visière (40, 82, 86) sont agencées en face l'une de l'autre.
